# DEMANDE DE BREVET EUROPEEN

(11) **EP 0 650 928 A1**
(43) Date de publication de la demande: **03.05.1995**
(21) Numéro de dépôt: 94402181.5
(22) Date de dépôt: 29.09.1994
(51) Int. Cl.: C01G 45/02

(54) **Pyrolusite micronisée, utilisation de celle-ci comme oxydant naturel dans l'industrie céramique et chimique et procédé de préparation de celle-ci**

(30) Priorité: 01.10.1993 FR 9311724
(71) Demandeur: S.A. CHERIFIENNE D'ETUDES MINIERES, Casablanca (MA)
(72) Inventeur: El Kettani, Mohammed Abdou, Anfa Casablanca (MA)
(74) Mandataire: Martin, Jean-Jacques

(57) **Abrégé**

L'invention concerne une pyrolusite micronisée enrichie en particules de granulométrie inférieure à 2,5 micromètres et présentant une surface spécifique élevée.

La pyrolusite selon l'invention est susceptible d'être obtenue par le traitement suivant de minerai de pyrolusite brut extrait :
a) obtention d'un minerai de granulométrie inférieure à 15 mm notamment par concassage et criblage et élimination simultanée d'une partie du stérile,
b) broyage ménagé et sélectif du minerai obtenu à l'étape a) de façon à obtenir une granulométrie inférieure à 500 micromètres et élimination simultanée d'une partie du stérile,
c) séchage,
d) sélection notamment pneumatique de la gamme granulométrique de façon à obtenir la pyrolusite micronisée.

Utilisation de ladite pyrolusite comme puissant oxydant naturel dans l'industrie céramique et dans les industries chimiques où elle peut aussi jouer le rôle de catalyseur et de sensibilisateur de flamme favorisant l'allumage d'un comburant.

## Description

La présente invention concerne une nouvelle pyrolusite micronisée présentant une surface spécifique géométrique exceptionnellement élevée qui augmente son degré de réaction chimique.

Elle concerne également un procédé de préparation de ladite pyrolusite.

Les oxydes de manganèse se trouvent à l'état naturel sous différentes variétés de compositions minéralogiques et sont souvent associés à d'autres éléments.

Les minerais d'oxyde de manganèse sont constitués d'une ou plusieurs de ces variétés. Par exemple, la pyrolusite contient de 60 à 90 % de bioxyde de manganèse ou MnO₂. La pyrolusite se présente en forme d'aiguilles généralement groupées en rubans ou en geodes. Parmi les autres variétés de minerais, on peut citer à titre indicatif la braunite noire contenant majoritairement du Mn₂O₃, l'acerdese ou manganite contenant un hydroxyde de formule Mn₂O₃, OH₂ et l'haussmanite oxyde salin rouge contenant majoritairement du Mn₃O₄ et étant généralement très riche en manganèse.

En ce qui concerne plus particulièrement la pyrolusite, cette forme minéralogique est en réalité une peuso-morphose naturelle de la polianite MnO₂ quadratique qui se présente sous forme de cristaux extrêmement fins. La pyrolusite provient de l'oxydation naturelle de la manganite, dont elle a conservé la maille orthorhombique. La transformation s'effectue par oxydation sans apport supplémentaire de manganèse, avec une réduction de volume de l'ordre de 15 %. Les autres constituants du minerai sont liés aux caractéristiques des gisements sédimentaires en association avec la pyrolusite. La pyrolusite a une coloration gris noir. Sa dureté varie de 2 à 2,5, sa densité est de 4,8 pour un minerai en place avant extraction.

Les minerais de pyrolusite extraits subissent des traitements et des préparations variés pour réduire les taux d'impureté et conférer aux minerais des caractéristiques particulières. Ces préparations dans une certaine mesure dépendent de la constitution minéralogique du minerai brut et des usages du produit final.

De manière générale, les minerais de manganèse naturels broyés connus sur le marché présentent une surface spécifique géométrique de l'ordre du m²/g correspondant à une granulométrie allant jusqu'à 100 micromètres.

L'utilisation du bioxyde de manganèse en tant que catalyseur est déjà bien connu dans l'art, notamment comme catalyseur augmentant la vitesse de combustion ou en d'autres termes comme sensibilisateur de flamme.

En particulier, le bioxyde de manganèse est utilisé en faible quantité dans les compositions pour boutons d'allumettes, telles qu'elles sont décrites par exemple dans la demande de brevet FR-A-2 581 640, les demandes de brevet européen EP-A-108 532 et EP-A-489 939.

L'invention propose en premier lieu une nouvelle pyrolusite présentant des propriétés améliorées par rapport à celles déjà connues. En particulier l'invention propose une pyrolusite obtenue à partir d'un minerai naturel brut, présentant des caractéristiques physico-chimiques spécifiques améliorées notamment en ce qui concerne le pouvoir oxydant et le rôle de catalyseur et de sensibilisateur de flamme favorisant l'allumage d'un comburant.

La pyrolusite micronisée selon l'invention est caractérisée en ce qu'elle est enrichie en particules de granulométrie inférieure à 2,5 micromètres et en ce qu'elle présente une surface spécifique géométrique élevée, de préférence supérieure à 2 m²/g et pouvant atteindre 4 m²/g.

La surface spécifique géométrique calculée par les appareils du laboratoire de la Mine ne concerne que les dimensions des grains. La surface spécifique réelle est la somme de la surface spécifique géométrique et de la surface due à la porosité dans les grains, elle est obtenue par absorption de gaz et elle est toujours supérieure à la surface géométrique.

La pyrolusite selon l'invention est un produit naturel dans la mesure où l'enrichissement en particules de faible granulométrie n'a pas transformé physiquement ladite pyrolusite. On sait de plus que dans le minerai de pyrolusite les cristaux de bioxyde de manganèse présentent une granulométrie moyenne inférieure à celle des autres constituants du minerai. En conséquence, l'enrichissement de la pyrolusite en granulométrie inférieure à 2,5 micromètres conduira à un produit enrichi présentant une proportion supérieure en cristaux de bioxyde de manganèse.

Par enrichissement, on entend que les aiguilles de pyrolusite ont été concentrées par coupure, notamment pneumatique, dans les particules de plus faible granulométrie et notamment dans les particules de granulométrie inférieure à 2,5 micromètres, ce qui conduit à un enrichissement en cristaux de MnO₂ par rapport à la pyrolusite normale.

Selon une variante préférée, la proportion en poids de pyrolusite de granulométrie inférieure à 2,5 micromètres est supérieure à 15 %, de préférence supérieure à 20 %, avantageusement comprise entre 20 et 50 %.

Avantageusement, la granulométrie supérieure de la pyrolusite selon l'invention est inférieure ou égale à 100 micromètres.

Avantageusement encore, la granulométrie supérieure est inférieure ou égale à 50 micromètres, de préférence inférieure ou égale à 30 micromètres et la proportion en poids de particules de granulométrie inférieure à 2,5 micromètres est supérieure ou égale à 40 %.

De préférence, les pyrolusites selon l'invention contiennent au moins 65 % de bioxyde de manganèse, de préférence au moins 70 % et pouvant aller jusqu'à 92 %.

Avantageusement une telle pyrolusite présente une densité comprise entre 1,5 et 4, de préférence 2 et 3, et une dureté comprise entre 2 et 2,5.

De préférence encore, la pyrolusite est telle qu'elle est susceptible d'être obtenue par le traitement suivant du minerai de pyrolusite brut extrait :
a) obtention d'un minerai de granulométrie inférieure à 15 mm notamment par concassage et criblage et élimination simultanée d'une partie du stérile,
b) broyage ménagé et sélectif du minerai obtenu à l'étape a) de façon à obtenir une granulométrie inférieure à 500 micromètres et élimination simultanée d'une partie du stérile,
c) séchage à une température comprise entre 100 et 120°C environ,
d) sélection, notamment pneumatique, de la tranche granulométrique de façon à obtenir la pyrolusite micronisée.

D'autres procédés de sélection comme la flottation peuvent également être utilisés.

La pyrolusite selon l'invention ne résulte pas d'une transformation mécanique, mais d'une sélection naturelle des cristaux de pyrolusite existants. Cette sélection n'altère pas la réactivité chimique des cristaux de pyrolusite. Au contraire, on récupère ces derniers qui sont à l'échelle de quelques microns, en augmentant leur concentration par unité de volume. De ce fait, on a une augmentation de la surface spécifique du produit final ainsi qu'une nette amélioration de sa réactivité et de son pouvoir oxydant. Il s'agit en réalité d'une modification importante du produit final. En effet, les caractéristiques chimiques d'un produit micronisé qui titre 70 % MnO₂ sont équivalentes ou supérieures à celles d'un produit connu qui titre 84 % MnO₂.

La pyrolusite micronisée selon l'invention est en outre caractérisée par la quasi absence de pics endothermiques, parasites qui apparaissent pour les autres minerais entre les deux phases de décomposition de MnO₂ puis de Mn₂O₃ des diagrammes d'analyse thermique différentielle (A.T.D.).

Les études effectuées en Novembre 1992 par le Centre de Transfert de Technologie Céramique de Limoges pour le compte de la Demanderesse ont permis la caractérisation des différents types de pyrolusite micronisée et Ultra Fines en provenance de la Demanderesse qui exploite les Mines de l'IMINI au Maroc.

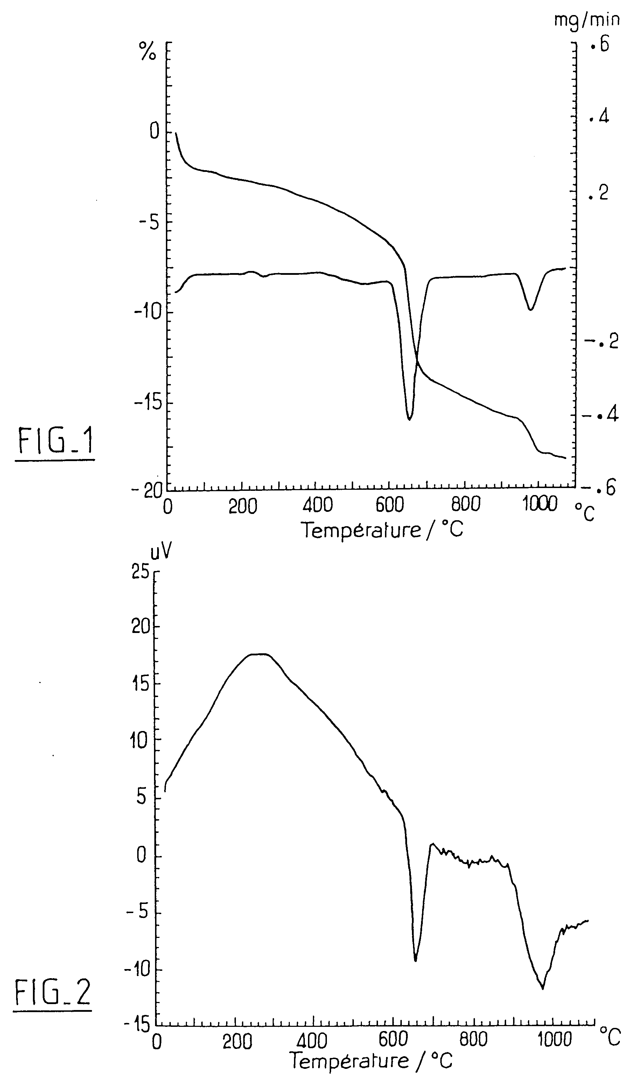

Les figures 1 à 10 annexées à la présente demande représentent les courbes d'analyse thermodifférentielle de différentes pyrolusites selon l'invention, obtenues dans les conditions suivantes :

L'appareillage utilisé est une thermobalance Netzch type STA 409 C/31E avec un four platine à 1500°C.
Les échantillons testés sont de 30 mg chacun
Atmosphère : air
référence alumine calciné : 37,1 mg

Les segments sont réalisé selon une montée en température de 10°C/mm de 20°C à 1100°C.

Les mesures telles qu'elles apparaissent sur les figures 1 à 10 font appel à l'analyse thermique différentielle (A.T.D.) qui permet de détecter les changements d'état des matériaux en fonction de la température.

Les figures 2, 4, 6, 8, 10 font appel à une méthode d'analyse différentielle qui permet de détecter les températures de transition des matériaux qui correspondent à une variation d'énergie interne de celui-ci.

Concrètement, un matériau à tester (la pyrolusite) et un corps de référence sont placés dans un four. Le corps de référence est inerte thermiquement et en conséquence ne révèlera pas de changement d'état dans l'intervalle de température considéré. Le corps de référence et le matériau à tester sont reliés par un thermocouple qui permettra de mesurer (en microvolt) à tout moment la variation de température entre les deux corps et notamment aux moments où le matériau à tester subira une transformation particulière.

Pratiquement, l'échantillon à tester étant placé dans le four mentionné ci-dessus et étant relié au corps de référence par un thermocouple, on commence la montée en température.

Dans le cas de la pyrolusite lors d'un changement d'état (passage à un premier état oxydé Mn₂O₃ ou passage à un second état oxydé Mn₃O₄) on observera une brusque variation (pic) de température de l'échantillon qui correspondra à une réaction endothermique, c'est-à-dire qui absorbe de la chaleur. Si le produit est pur, il n'apparaîtra sur le diagramme que deux pics correspondant aux réactions endothermiques précitées. Par contre, au plus le produit comprendra d'impuretés, au plus d'autres pics parasites correspondant aux transformations de ces impuretés apparaîtront.

Une autre méthode d'analyse différentielle à laquelle font appel les figures annexées 1, 3, 5, 7, 9 permet de déterminer la variation de perte de poids de l'échantillon en fonction de la température. Les variations correspondent aux transformations gazeuses sous l'effet du chauffage et correspondent en fait aux changements d'état déterminés par la méthode précédente. En effet, lorsque le bioxyde de manganèse à tester (MnO₂) passe à l'état Mn₂O₃, il perd un demi atome d'oxygène, en fait une mole de MnO₂ en se transformant perdra une demie mole d'oxygène. Dans le cas du passage de l'état Mn₂O₃ à Mn₃O₄, le corps perdra 3/2-4/3 = 0,166 mole d'oxygène, d'où une perte de poids correspondante. C'est pour cette raison que les figures annexées 1, 3, 5, 7, 9 présentent des pics aux mêmes températures que les figures 2, 4, 6, 8, 10.

Les courbes d'analyse thermodifférentielle des figures 1, 3, 5, 7, 9 sont données, en variation de perte de poids (en pourcentage et mg/min) en fonction de la température.

Les courbes d'analyse thermodifférentielle des figures 2, 4, 6, 8, 10 sont données en microvolts (ordonnées) en fonction de la température (°C). Les valeurs sont données en microvolts car elles sont mesurées par l'intermédiaire d'un thermocouple.

Les figures 1 et 2 représentent les courbes d'analyse thermodifférentielle obtenues avec la pyrolusite ultra-fine micronisée UM 74 qui présente une granulométrie limite supérieure, inférieure à 30 µm environ, dont la proportion de particules de granulométrie inférieure à 2,5 micromètres est d'environ 40 % et qui comporte 74 % en poids de MnO₂.

Sur la figure 2, on observe un pic endothermique à 650°C (formation de Mn₂O₃). Le deuxième pic endothermique apparaît à 960-980°C (formation de Mn₃O₄). Les pertes de poids figurées en 1 correspondent aux pics endothermiques précités.

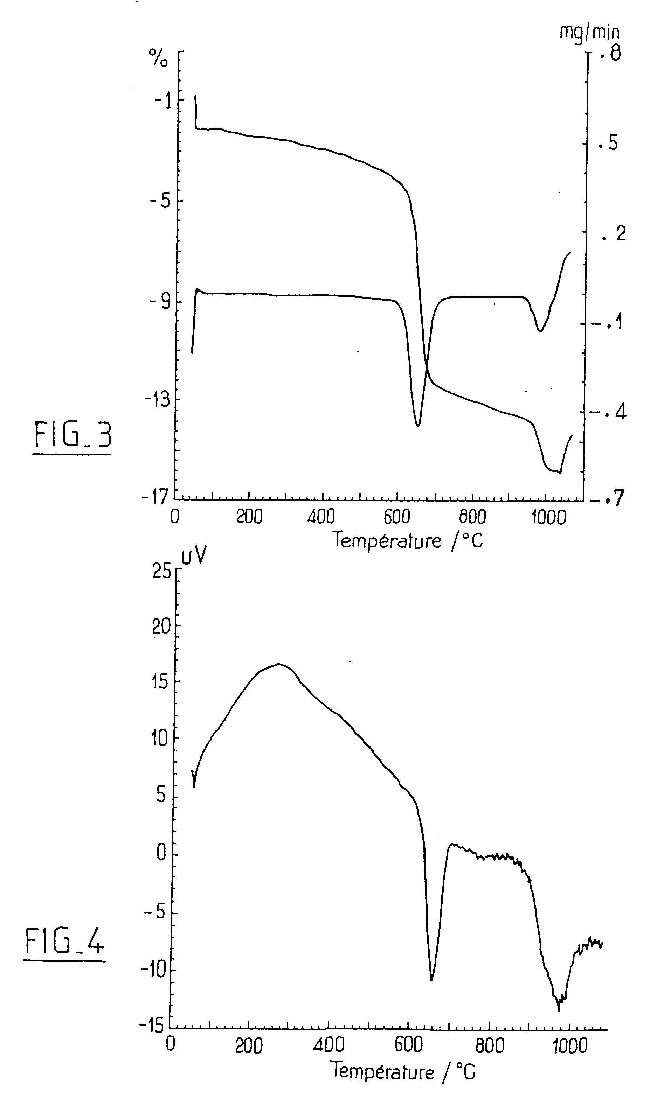

Les figures 3 et 4 représentent les courbes d'analyse thermodifférentielle obtenues avec la pyrolusite ultra-fine micronisée UM 84 qui présente une granulométrie limite supérieure, inférieure à 30 µm environ, dont la proportion de particules de granulométrie inférieure à 2,5 micromètres est d'environ 40 % et qui comporte 84 % en poids de MnO₂.

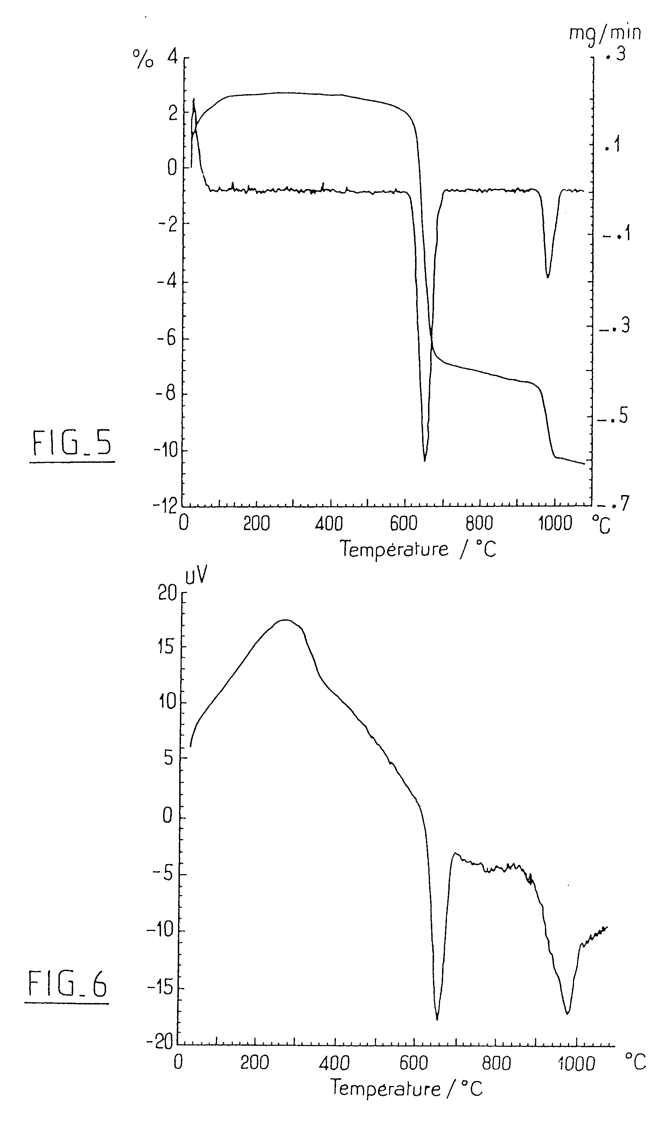

Les figures 5 et 6 représentent les courbes d'analyse thermodifférentielle obtenues avec la pyrolusite ultra-fine micronisée UM 92 qui présente une granulométrie limite supérieure, inférieure à 30 µm environ, dont la proportion de particules de granulométrie inférieure à 2,5 micromètres est d'environ 40 % et qui comporte 92 % en poids de MnO₂.

Comme on peut le constater au vu des figures 3 à 6, les pyrolusites UM 84 et UM 92 présentent les mêmes caractéristiques que les pyrolusites UM 74 avec néanmoins une réactivité (surface de pic) augmentant avec le titrage en MnO₂. La réactivité devient beaucoup plus importante en UM 92.

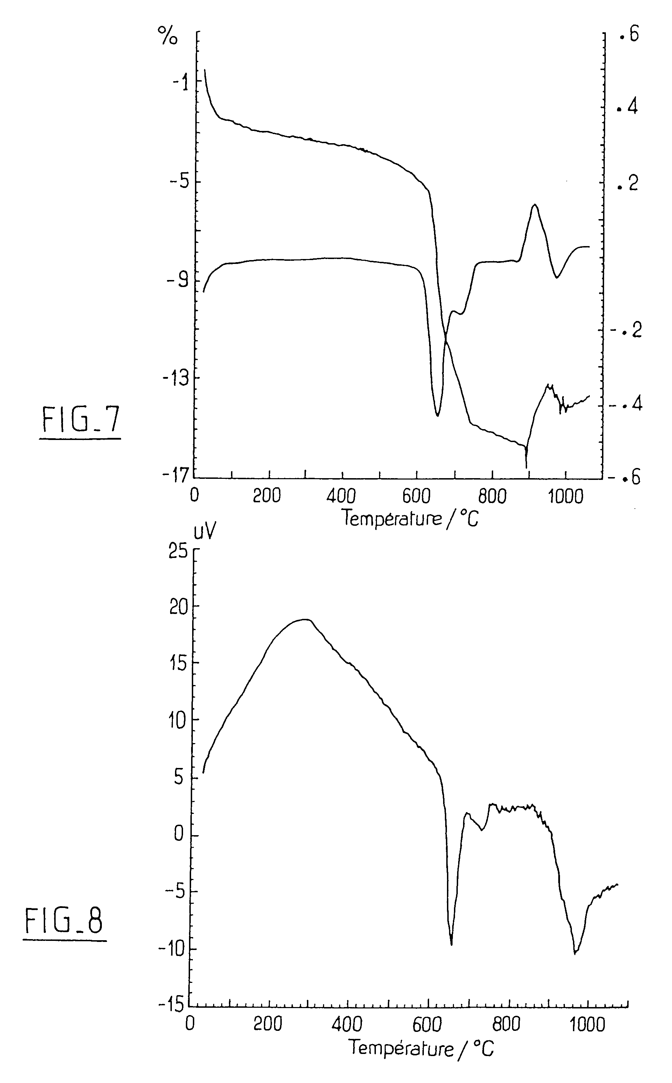

Les figures 7 et 8 représentent les courbes d'analyse thermodifférentielle de la pyrolusite UFM 74 dont la granulométrie limite supérieure est inférieure à 50 micromètres environ et dont la proportion de particules de granulométrie inférieure à 2,5 micromètres est d'environ 30 %. Par rapport aux pyrolusites UM précédemment exemplifiées, la pyrolusite UFM 74 présente les deux pics endothermiques à 650°C et à 960-980°C et un troisième pic beaucoup plus petit à 720°C.

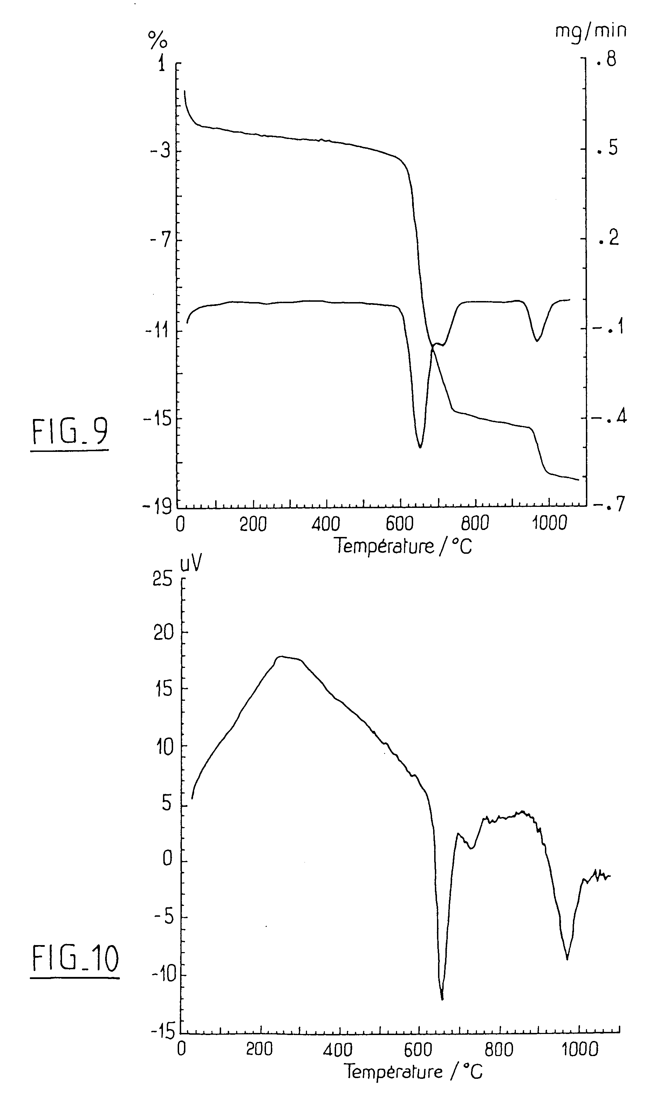

Les figures 9 et 10 représentent les courbes d'analyse thermodifférentielle d'une pyrolusite UF 84 (ultra fine) de granulométrie supérieure aux environs de 100 micromètres et dont la proportion de particules de granulométrie inférieure à 2,5 micromètres est d'environ 20 %.

Parmi les minerais bruts permettant d'obtenir la pyrolusite selon l'invention, il est avantageux d'utiliser ceux provenant du gisement d'IMINI (Maroc) ou de gisements équivalents

La pyrolusite selon l'invention, outre le bioxyde de manganèse, peut comprendre d'autres constituants, tels que la silice, la dolomie ou les oxydes métalliques comme l'oxyde ferrique.

Les oxydes métalliques, la poudre dolomie et la silice, sont en général présents dans une proportion en poids inférieure à 35 %.

L'utilisation dans les industries chimiques de l'Ultra-Micronisé, l'Ultra Fin Micronisé et l'Ultra Fin peut être avantageuse, en raison du rôle du bioxyde de manganèse contenu en tant que puissant oxydant et catalyseur avec une productivité supérieure à celle obtenue par l'utilisation des autres types de minerais de manganèse naturels broyés existants sur le marché. Dans les réactions pyrotechniques, le bioxyde de manganèse contenu intervient en plus comme sensibilisateur de flamme.

Dans le cas particulier de la réalisation de la composition pour boutons d'allumettes, les pyrolusites selon l'invention, notamment celles provenant du minerai d'IMINI contiennent, outre le bioxyde de manganèse, d'autres constituants tels que la silice, la dolomie et dex oxydes métalliques qui sont avantageux pour ce genre d'usage. On a en effet montré que les pyrolusites selon l'invention, notamment celles d'IMINI permettaient d'améliorer l'allumage du fait qu'elles contribuent à abaisser la température de décomposition spontanée du perchlorate. De plus, le fait qu'elles soient de couleur sombre (gris noir) leur confère aussi une grande capacité d'emmagasinage de l'énergie.

L'invention a donc également pour objet l'utilisation de la pyrolusite micronisée décrite précédemment, comme catalyseur favorisant l'allumage d'un comburant tel que le perchlorate d'ammonium.

Ces propriétés trouvent en particulier une application dans la réalisation de composition pour boutons d'allumettes dont on donne ci-après deux exemples :
- Composition pour boutons d'allumettes de sûreté en pourcentage en poids :
   . chlorate de potassium 20 à 60
   . liant, notamment gélatine 5 à 15
   . pyrolusite telle que décrite précédemment 30à70
   . charges 0 à 15
- Composition pour boutons d'allumettes de non sécurité en pourcentage en poids :
   . chlorate de potassium 5 à 25
   . liant, notamment gélatine 5 à 15
   . pyrolusite 50 à 80
   . charges (notamment oxydes métalliques, dolomie, silice) 0 à 20,
   . sesquisulfure de phosphore 1 à 10.

Les pyrolusites selon l'invention peuvent également être utilisées dans l'industrie des céramiques, notamment dans le traitement des coeurs noirs en cuisson rapide. Il a été trouvé en effet que :
. l'efficacité de la pyrolusite croît avec la pureté du minerai,
. les produits Ultra-micronisés sont plus actifs que les produits Ultra Fins,
. l'efficacité d'un Ultra Micronisé croît avec la rampe de montée en température,
. la courbe d'efficacité d'un Ultra Fin présente un maximum pour une rampe moyenne.

L'invention a également pour objet un procédé de préparation d'une telle pyrolusite, caractérisée en ce qu'un minerai de pyrolusite est soumis traitement suivant :
a) obtention d'un minerai de granulométrie inférieure à 15 mm notamment par concassage et criblage et élimination simultanée d'une partie du stérile,
b) broyage du minerai obtenu à l'étape a) de façon à obtenir une granulométrie inférieure à 500 micromètres et élimination simultanée d'une partie du stérile,
c) séchage à une température comprise entre 100 et 120°C,
d) sélection notamment pneumatique de la tranche granulométrique de façon à obtenir la pyrolusite micronisée.

De préférence, le traitement s'effectue de la façon suivante :
- La sélection est réalisée par des séparateurs à air en spirale en deux fractions, dont l'une supérieure et l'autre inférieure à une certaine dimension de particule (limite de séparation). La qualité du fractionnement réalisé dépend de l'uniformité des conditions. Le principe de sélection réside dans l'action de deux forces opposées, de la force centrifuge et de la force centripète de l'air à laquelle toute particule solide est soumise. Pour les particules plus grosses, la force centrifuge proportionnelle au cube du diamètre de la particule est prédominante et sont ainsi projetées vers l'extérieur, tandis que la force centripète proportionnelle au diamètre des particules est prévalente pour les plus fines, entraînées par l'air vers l'intérieur.

Les avantages de ces pyrolusites micronisées selon l'invention sont multiples :
- caractère naturel du produit conçu où les particules gardent une structure cristalline originelle de formation, leur conférant une surface spécifique relativement élevée,
- des teneurs en MnO₂ élevées et conformes aux besoins, obtenues par des moyens naturels, sans addition d'aucun réactif pouvant géner une utilisation industrielle ultérieure,
- la composition chimique est, en plus de l'élément principal MnO₂ constituée par un large éventail d'éléments importants pouvant être utiles pour leur utilisation (silice-dolomie oxydes métalliques) ultérieure,
- le produit élaboré possède outre une particularité liée à la répartition de sa composition chimique en fonction de la granulométrie où la teneur en MnO₂ est plus élevée pour les particules les plus fines. Cet avantage permet au produit élaboré d'être un puissant oxydant naturel présentant une surface spécifique élevée, donc une activité chimique importante,
- le produit a un prix relativement inférieur à celui des produits similaires préparés industriellement.

Les exemples ci-dessous illustrent certains modes de réalisation de la présente invention :

### Exemple 1 : Pyrolusite Ultra Micronisée (UM)

Une pyrolusite obtenue par le procédé de sélection pneumatique à partir d'un minerai extrait du gisement d'IMINI (Maroc) présente les caractéristiques suivantes :
- proportion de particules de granulométrie inférieure à 2,5 micromètres 40 %
- limite granulométrique supérieure-inférieure à 30 micromètres
- proportion de bioxyde de manganèse 84 %
- surface spécifique 3 à 4 m²/g
- densité 2 - 3
- dureté 2 à 2,5

### Exemple 2 : Pyrolusite Ultra Fine Micronisée

Selon le procédé décrit précédemment, une pyrolusite provenant du minerai d'IMINI (Maroc) présente les caractéristiques suivantes :
- proportion de particules de granulométrie inférieure à 2,5 micromètres 30 %
- limite granulométrique supérieure-inférieure à 50 micromètres
- proportion de bioxyde de manganèse 74 %
- surface spécifique 2 m²/g
- densité entre 2 et 3
- dureté 2 à 2,5

### Exemple 3

On donne ci-après une composition pour boutons d'allumettes de sûreté réalisée à l'aide des pyrolusites de l'exemple 1 et 2 en pourcentage en poids :
- perchlorate de potassium 40
- gélatine 10
- UM ou UFM ou UF 50

### Exemple 4

On donne ci-après une composition pour boutons d'allumettes de non sécurité réalisée à l'aide des pyrolusites de l'exemple 1 et 2 en pourcentage en poids :
- perchlorate de potassium 15
- gélatine 10
- UM ou UFM ou UF 70
- sesquisulfure de phosphore 5

## Revendications

1. Pyrolusite micronisée caractérisée en ce qu'elle est enrichie en particules de granulométrie inférieure à 2,5 micromètres et en ce qu'elle présente une surface spécifique élevée.

2. Pyrolusite selon la revendication 1, caractérisée en ce que la proportion en poids de pyrolusite de granulométrie inférieure à 2,5 micromètres est supérieure à 15 %, avantageusement entre 20 et 50 %.

3. Pyrolusite selon la revendication 2, caractérisée en ce que la granulométrie supérieure est inférieure ou égale à 100 micromètres.

4. Pyrolusite selon la revendication 3, caractérisée en ce que la granulométrie supérieure est inférieure ou égale à 50 micromètres, de préférence inférieure ou égale à 30 micromètres, et en ce que la proportion en poids de particules de granulométrie inférieure à 2,5 micromètres est supérieure ou égale à 40 %.

5. Pyrolusite selon l'une des revendications 1 à 4, caractérisée en ce qu'elle contient au moins 65 % de bioxyde de manganèse, de préférence au moins 70 %.

6. Pyrolusite selon l'une des revendications 1 à 5, caractérisée en ce qu'elle a une densité comprise entre 1,5 et 4, de préférence 2 et 3, une dureté comprise entre 2 et 2,5 et en ce qu'elle est susceptible d'être obtenue par le traitement suivant de minerai de pyrolusite brut extrait :
a) obtention d'un minerai de granulométrie inférieure à 15 mm notamment par concassage et criblage et élimination simultanée d'une partie du stérile,
b) broyage du minerai obtenu à l'étape a) de façon à obtenir une granulométrie inférieure à 500 micromètres et élimination simultanée d'une partie du stérile,
c) séchage à une température comprise entre 100 et 120°C,
d) sélection notamment pneumatique de la gamme granulométrique de façon à obtenir la pyrolusite micronisée.

7. Pyrolusite selon la revendication 6, caractérisée en ce que le minerai brut est de la pyrolusite d'IMINI (Maroc) ou de gisements équivalents.

8. Pyrolusite selon l'une des revendications 1 à 7, caractérisée en ce que, outre le bioxyde de manganèse, elle comprend des oxydes métalliques, de la dolomie, de la silice dans une proportion en poids inférieure à 35 %.

9. Pyrolusite ultra micronisée ou ultra fine micronisée selon la revendication 1, caractérisée en ce qu'elle présente une quasi absence de pics endothermiques, parasites entre les deux phases de décomposition de MnO₂ puis de MnO₃ des diagrammes d'analyse thermodifférentielle (A.T.D.).

10. Utilisation de la pyrolusite micronisée selon l'une des revendications 1 à 9, comme catalyseur favorisant l'allumage d'un comburant tel que le perchlorate d'ammonium.

11. Procédé de préparation d'une pyrolusite selon l'une des revendications 1 à 9, caractérisé en ce qu'un minerai de pyrolusite est soumis traitement suivant :
a) obtention d'un minerai de granulométrie inférieure à 15 mm notamment par concassage et criblage et élimination simultanée d'une partie du stérile,
b) broyage du minerai obtenu à l'étape a) de façon à obtenir une granulométrie inférieure à 500 micromètres et élimination simultanée d'une partie du stérile,
c) séchage à une température comprise entre 100 et 120°C,
d) sélection notamment pneumatique de la gamme granulométrique de façon à obtenir la pyrolusite micronisée.
